# EUROPEAN PATENT APPLICATION

(11) **EP 4 681 998 A1**
(43) Date of publication of application: **21.01.2026**
(21) Application number: 24917960.7
(22) Date of filing: 24.06.2024
(51) Int. Cl.: B60T 7/16

(54) **TRAIN RESCUE METHOD, TRAIN RESCUE SYSTEM, AND RESCUE LOCOMOTIVE**

(30) Priority: 15.01.2024 CN 202410054041
(71) Applicant: CRRC Changchun Railway Vehicles Co., Ltd., Changchun, Jilin 130000 (CN)
(72) Inventor: MENG, Fanhui, Changchun, Jilin 130000 (CN); LI, Xuefei, Changchun, Jilin 130000 (CN); YANG, Yang, Changchun, Jilin 130000 (CN); XU, Yunhe, Changchun, Jilin 130000 (CN)
(74) Representative: v. Bezold & Partner Patentanwälte - PartG mbB
(86) International application number: PCT/CN2024/100970
(87) International publication number: WO 2025/152346

(57) **Abstract**

A train rescue method, comprising: when a rescue locomotive applies service braking, a pressure sensor (02) collects a pressure value of a locomotive train pipe and sends same to an instruction conversion unit of the locomotive; the instruction conversion unit sends a service braking instruction and a braking level electric signal to a braking control system of a rescued train on the basis of a braking level corresponding to the pressure value; and the braking control system controls the rescued train to brake; when the rescue locomotive applies emergency braking, a pressure switch (01) of the locomotive sends an emergency braking electric signal to an emergency braking solenoid valve (05) and an emergency braking train line; the emergency braking solenoid valve (05) vents the locomotive train pipe by means of a pneumatic piston valve (04); the emergency braking train line sends the emergency braking electric signal to the braking control system of the rescued train; and the braking control system controls the train to apply emergency braking. By using the method, the economic costs and maintenance costs of rescued trains are reduced, and the rescue efficiency and safety during rescue are improved. Further provided are a train rescue system and a rescue locomotive.

## Description

### CROSS-REFERENCE TO RELATED APPLICATION

The present application claims priority to the Chinese patent application No. 2024100540412 filed on January 15, 2024 with the Chinese Patent Office, and entitled "TRAIN RESCUE METHOD, TRAIN RESCUE SYSTEM, AND RESCUE LOCOMOTIVE", the contents of which are incorporated herein by reference in entirety.

### TECHNICAL FIELD

The present invention relates to the technical field of traffic rescue, and specifically to a train rescue method, a train rescue system and a rescue locomotive.

### BACKGROUND ART

Currently, when a municipal train breaks down and fails to run, it is typically towed back to a depot by another municipal train or a self-equipped engineering locomotive. For the rescue method using the engineering locomotive, since current municipal train braking systems employ a direct-acting electro-pneumatic braking system, while rescue locomotives employ an automatic pneumatic braking system, the two braking systems cannot be directly compatible. This thus leads to two cases during rescue. One is that the braking systems of a locomotive and a faulty municipal train are not connected, and a braking function of the faulty train is disabled, while in this case, due to a low braking force, the whole train only can be rescued to return to the depot at a very low speed. The other case is that a braking instruction conversion device is provided on all municipal trains, and a pneumatic braking instruction of the locomotive is converted into an electrical braking instruction of the municipal train, so as to enable the locomotive and the municipal train to apply braking synchronously.

Researches reveal that, in the first case, if the train is rescued back to the depot at a very low speed, it will reduce rescue efficiency of the rescue locomotive in rescue operation, and since the braking systems of the locomotive and the faulty municipal train are not connected, if an emergency occurs in either the faulty train or the faulty municipal train, the other party would be affected by the emergency, thereby compromising safety of the rescue operation. In the second case, however, it is necessary to install two additional sets of braking instruction conversion devices on every municipal train, along with adding a train pipe for communicating with the locomotive, relevant valves, etc., and these additional devices are only potentially used when the train fails and requires rescue, resulting in an extremely low utilization rate, thus significantly increasing both purchase costs and maintenance costs of the municipal trains.

### SUMMARY

In view of this, the present invention aims at providing a train rescue method, a train rescue system and a rescue locomotive, so as to reduce the purchase costs and the maintenance costs of municipal trains, and improve rescue efficiency and safety during rescue of rescued trains.

In the first aspect, embodiments of the present application provide a train rescue method, applied to a train rescue system, where the system includes a rescue locomotive and a rescued train. The rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit. The rescued train includes a train rescue mode switch, a train control system and a braking control system. The method includes:
when the locomotive rescue mode switch is switched on, the locomotive control system sends a locomotive rescue mode activation electric signal to the instruction conversion unit, so as to activate the instruction conversion unit; and when the train rescue mode switch is switched on, the train control system sends a train rescue mode activation electric signal to the braking control system, so as to activate the braking control system to enter a rescued mode;
when the rescue locomotive applies service braking, the pressure sensor collects a pressure value of the locomotive train pipe and sends the pressure value to the instruction conversion unit; the instruction conversion unit sends a braking instruction to the braking control system, and sends a braking level electric signal to the braking control system on the basis of a target braking level corresponding to the pressure value; and in response to the braking instruction and the braking level electric signal, the braking control system controls the rescued train to brake at the target braking level; and
when the rescue locomotive applies emergency braking, when the pressure value of the locomotive train pipe drops to a set value, the pressure switch sends an emergency braking electric signal to the emergency braking solenoid valve and the emergency braking train line; in response to the emergency braking electric signal, the emergency braking solenoid valve vents the locomotive train pipe by means of the pneumatic piston valve; the emergency braking train line sends the emergency braking electric signal to the braking control system; and the braking control system controls the rescued train to apply emergency braking.

Optionally, the method further includes:
upon triggering of unexpected emergency braking on the rescued train, sending, by the train control system, an emergency braking electrical signal to the braking control system and the emergency braking solenoid valve;
in response to the emergency braking electrical signal, controlling, by the braking control system, the rescued train to apply the emergency braking; and
in response to the emergency braking electrical signal, controlling, by the emergency braking solenoid valve, the locomotive train pipe to discharge air, so as to enable the rescue locomotive to synchronously apply the emergency braking.

Optionally, the rescue locomotive further includes a locomotive relay, a locomotive main reservoir pipe, a main reservoir pipe cutout cock and a train pipe cutout cock, and the rescued train further includes a train main reservoir pipe, where
the relay is provided between the pressure switch and the emergency braking train line; the emergency braking train line is connected to the emergency braking solenoid valve, the instruction conversion unit, the braking control system, and the train control system, respectively, and the emergency braking train line is configured to transmit the emergency braking electric signal; the rescue locomotive and the rescued train are coupled through couplers, various electrical train lines in the rescue locomotive and the rescued train are connected through the couplers, and the locomotive main reservoir pipe and the train main reservoir pipe communicate through the couplers.

Optionally, when the pressure switch sends the emergency braking electric signal to the emergency braking train line, the method further includes:
starting timing by the relay when the pressure switch sends the emergency braking electric signal, and after delaying for a set period, bypassing the emergency braking electric signal sent by the pressure switch, so as to terminate transmission of the emergency braking electric signal, and prevent a non-releasable closed loop formed by continuous air discharge of the pressure switch and the emergency braking solenoid valve, so as to enable the rescue locomotive, after stop, to supply air to the locomotive train pipe to release.

Optionally, the method includes:
continuously detecting, by the instruction conversion unit, the pressure value of the locomotive train pipe through the pressure sensor, and determining whether the pressure value drops to the set value; and
if the pressure value drops to the set value, determining, by the instruction conversion unit, that the rescue locomotive has applied the emergency braking, and sending a braking instruction and a maximum service braking level signal to the braking control system, so as to realize redundant backup of emergency braking instruction issuance.

Optionally, the method further includes:
performing, by the instruction conversion unit, failure diagnosis based on the emergency braking electrical signal, the emergency braking electric signal sent by the pressure switch and a detection value of the pressure sensor.

In the second aspect, embodiments of the present application provide a train rescue system, including a rescue locomotive and a rescued train, where the rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit, and the rescued train includes a train rescue mode switch, a train control system and a braking control system;
when the locomotive rescue mode switch is switched on, the locomotive control system is configured to send a locomotive rescue mode activation electric signal to the instruction conversion unit, so as to activate the instruction conversion unit; and when the train rescue mode switch is switched on, the train control system is configured to send a train rescue mode activation electric signal to the braking control system, so as to activate the braking control system to enter a rescued mode;
when the rescue locomotive applies service braking, the pressure sensor is configured to collect a pressure value of the locomotive train pipe and send the pressure value to the instruction conversion unit; the instruction conversion unit is configured to send a braking instruction to the braking control system, and send a braking level electric signal to the braking control system on the basis of a target braking level corresponding to the pressure value; and the braking control system is configured to, in response to the braking instruction and the braking level electric signal, control the rescued train to brake at the target braking level; and
when the rescue locomotive applies emergency braking, when the pressure value of the locomotive train pipe drops to a set value, the pressure switch is configured to send an emergency braking electric signal to the emergency braking solenoid valve and the emergency braking train line; the emergency braking solenoid valve is configured to, in response to the emergency braking electric signal, vent the locomotive train pipe by means of the pneumatic piston valve; the emergency braking train line is configured to send the emergency braking electric signal to the braking control system; and the braking control system is configured to control the rescued train to apply emergency braking.

Optionally, the train control system is configured to, upon triggering of unexpected emergency braking on the rescued train, send an emergency braking electrical signal to the braking control system and the emergency braking solenoid valve;
the braking control system is configured to, in response to the emergency braking electrical signal, control the rescued train to apply the emergency braking; and
the emergency braking solenoid valve is configured to, in response to the emergency braking electrical signal, control the locomotive train pipe to discharge air, so as to enable the rescue locomotive to synchronously apply the emergency braking.

Optionally, the rescue locomotive further includes a locomotive relay, a locomotive main reservoir pipe, a main reservoir pipe cutout cock and a train pipe cutout cock, and the rescued train further includes a train main reservoir pipe, where
the relay is provided between the pressure switch and the emergency braking train line; the emergency braking train line is connected to the emergency braking solenoid valve, the instruction conversion unit, the braking control system, and the train control system, respectively, and the emergency braking train line is configured to transmit the emergency braking electric signal; and the rescue locomotive and the rescued train are coupled through couplers, various electrical train lines in the rescue locomotive and the rescued train are connected through the couplers, and the locomotive main reservoir pipe and the train main reservoir pipe communicate through the couplers.

Optionally, the relay is configured to start timing when the pressure switch sends the emergency braking electric signal to the emergency braking train line, and after delaying for a set period, bypass the emergency braking electric signal sent by the pressure switch, so as to terminate transmission of the emergency braking electric signal, and prevent a non-releasable closed loop formed by continuous air discharge of the pressure switch and the emergency braking solenoid valve, so as to enable the rescue locomotive, after stop, to supply air to the locomotive train pipe to release.

Optionally, the instruction conversion unit is configured to continuously detect the pressure value of the locomotive train pipe through the pressure sensor, and determine whether the pressure value drops to a set value; and
the instruction conversion unit is configured to, if the pressure value drops to the set value, determine that the rescue locomotive has applied the emergency braking, and send a braking instruction and a maximum service braking level signal to the braking control system, so as to realize redundant backup of emergency braking instruction issuance.

Optionally, the instruction conversion unit is configured to perform failure diagnosis based on the emergency braking electrical signal, the emergency braking electric signal sent by the pressure switch and a detection value of the pressure sensor.

In the third aspect, embodiments of the present application provide a rescue locomotive, where the rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit, where
when the locomotive rescue mode switch is switched on, the locomotive control system is configured to send a locomotive rescue mode activation electric signal to the instruction conversion unit, so as to activate the instruction conversion unit;
when the rescue locomotive applies service braking, the pressure sensor is configured to collect a pressure value of the locomotive train pipe and send the pressure value to the instruction conversion unit; and
when the rescue locomotive applies emergency braking, the pressure switch is configured to send an emergency braking electric signal to the emergency braking solenoid valve and the emergency braking train line; and the emergency braking solenoid valve is configured to, in response to the emergency braking electric signal, vent the locomotive train pipe by means of the pneumatic piston valve.

Technical solutions provided by the present application include, but not limited to, beneficial effects as follows.

For the train rescue method provided by the present application, by providing the pressure switch, the pressure sensor, the pneumatic piston value, the emergency braking train line, the emergency braking solenoid valve, the locomotive train pipe, the locomotive rescue mode switch, the locomotive control system and the instruction conversion unit in the rescue locomotive, and providing the train rescue mode switch, the train control system and the braking control system in the rescued train, it is realized that the electric signal containing braking instruction information is generated based on a locomotive train pipe pressure signal through mutual cooperation between individual devices, then the electric signal sent from the rescue locomotive is transmitted to the rescued train through the instruction conversion unit or the pressure switch, so as to control the rescued train to perform the service or emergency braking, or the emergency braking electric signal sent from the rescued train is transmitted to the rescue locomotive, and the rescue locomotive is controlled to perform the emergency braking through the emergency braking solenoid valve and the pneumatic piston value, thus realizing that the rescue operation can be completed just by providing one set of braking instruction conversion device. Moreover, the train rescue system can implement signal transmission from the rescue locomotive to the rescued train, and also can implement signal transmission from the rescued train to the rescue locomotive, thus enabling the rescue locomotive and the rescued train to control, based on a braking state of one party, the other party to also maintain the braking state, thereby ensuring that the braking state of the rescue locomotive and the rescued train remain synchronized.

By employing the above solutions, compared with the prior art in which all rescued trains need to be installed with two additional sets of braking instruction conversion devices to complete the rescue operation, the present application can complete the rescue operation just by providing one set of braking instruction convention device, thus reducing the purchase costs and maintenance costs of the rescued trains. In addition, the rescue locomotive and the rescued train can control, based on the braking state of one party, the other party to maintain the braking state, thereby ensuring that the braking state of the rescue locomotive and the rescued train remain synchronized, thus improving the rescue efficiency and safety when rescuing the rescued train.

In order to make the above objectives, features and advantages of the present invention more obvious and more understandable, detailed description is given below particularly with preferred embodiments in conjunction with drawings.

### BRIEF DESCRIPTION OF THE DRAWINGS

In order to illustrate technical solutions of embodiments of the present invention more clearly, drawings which need to be used in the embodiments will be briefly introduced below. It should be understood that the drawings merely show some embodiments of the present invention, and thus should not be considered as limitation to the scope, and those ordinarily skilled in the art still could obtain other relevant drawings according to the drawings, without using any inventive efforts.
FIG. 1 shows a flowchart of a train rescue method provided by Embodiment 1 of the present invention;
FIG. 2 shows a flowchart of a rescue locomotive braking method provided by Embodiment 1 of the present invention;
FIG. 3 shows a flowchart of an emergency braking instruction backup method provided by Embodiment 1 of the present invention; and
FIG. 4 shows a structural schematic diagram of a train rescue system provided by Embodiment 2 of the present invention.

### DETAILED DESCRIPTION OF EMBODIMENTS

In order to make objectives, technical solutions and advantages of the present invention clearer, the technical solutions in embodiments of the present invention will be clearly and completely described below in conjunction with drawings in the embodiments of the present invention. Obviously, only some but not all embodiments of the present invention are described. Generally, components in the embodiments of the present invention, as described and shown in the drawings herein, may be arranged and designed in various different configurations. Therefore, the detailed description below of the embodiments of the present invention provided in the drawings is not intended to limit the scope of protection of the present invention, but merely illustrates chosen embodiments of the present invention. All other embodiments obtained by those skilled in the art based on the embodiments of the present invention without any inventive efforts shall fall within the scope of protection of the present invention.

### Embodiment 1

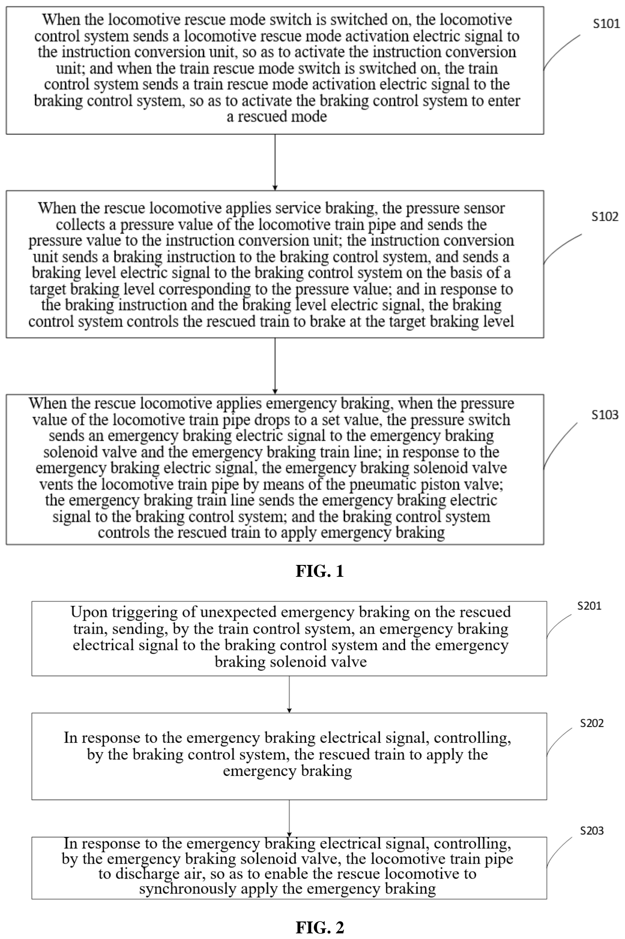

For facilitating an understanding of the present application, Embodiment 1 of the present invention is described in detail below in conjunction with contents of description of a flowchart of a train rescue method provided by Embodiment 1 of the present application shown in FIG. 1.

With reference to FIG. 1, FIG. 1 shows a flowchart of a train rescue method provided by Embodiment 1 of the present invention, applied to a train rescue system. The system includes a rescue locomotive and a rescued train. The rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit. The rescued train includes a train rescue mode switch, a train control system and a braking control system. Specifically, the pressure switch and the pressure sensor are provided on the rescue locomotive, connected to the train pipe of the rescue locomotive, and configured to detect a pressure of the train pipe of the rescue locomotive; the pneumatic piston valve is also connected to the train pipe of the rescue locomotive, and is controlled by the emergency braking solenoid valve, and a main reservoir pipe connected to the emergency braking solenoid valve, when the latter is out of power, is in pressure communication with the pneumatic piston valve, and pushes the same to an air discharge position, so as to enable the train pipe of the rescue locomotive to vent to atmosphere. The instruction conversion unit installed on the rescue locomotive reads electric signals of the pressure switch, the pressure sensor and an emergency braking electrical line. A braking instruction unit outputs a braking instruction electrical line and a braking level electrical line to a braking control system of a rescued municipal train. The rescue locomotive and the rescued municipal train communicate with the main reservoir pipe and electrical train lines through couplers. The train rescue method includes steps S101-S103.

S101: When the locomotive rescue mode switch is switched on, the locomotive control system sends a locomotive rescue mode activation electric signal to the instruction conversion unit, so as to activate the instruction conversion unit; and when the train rescue mode switch is switched on, the train control system sends a train rescue mode activation electric signal to the braking control system, so as to activate the braking control system to enter a rescued mode.

Specifically, the locomotive rescue mode switch is provided in the rescue locomotive, the train rescue mode switch is provided in the rescued train, and when it is necessary to rescue the rescued train by the rescue locomotive, the locomotive rescue mode switch and the train rescue mode switch are manually switched on, control systems (corresponding to the locomotive control system and the train control system) of the rescue locomotive and the faulty municipal train (the rescued train) both output rescue mode activation electric signals (corresponding to the locomotive rescue mode activation electric signal and the train rescue mode activation electric signal) to the instruction conversion unit in the rescue locomotive and the braking control system in the rescued train, respectively.

When the rescue locomotive is employed to rescue the faulty municipal train, the rescue locomotive is coupled to the faulty municipal train through couplers, the rescue locomotive and the faulty municipal train employ the same couplers, main reservoir pipes and electrical lines can directly communicate through the couplers, and main reservoir pressure for the faulty municipal train is supplied by the rescue locomotive.

S102: When the rescue locomotive applies service braking, the pressure sensor collects a pressure value of the locomotive train pipe and sends the pressure value to the instruction conversion unit; the instruction conversion unit sends a braking instruction to the braking control system, and sends a braking level electric signal to the braking control system on the basis of a target braking level corresponding to the pressure value; and in response to the braking instruction and the braking level electric signal, the braking control system controls the rescued train to brake at the target braking level.

Specifically, since the rescue locomotive employs an automatic pneumatic braking system, the braking instruction thereof is transmitted via a train pipe pressure signal, and the train pipe pressure drops when braking is applied, and the train pipe pressure rises when braking is released.

When the rescue locomotive applies service braking (in a service braking condition), the train pipe pressure drops. Taking a train pipe constant pressure of 600 kPa as an example, from 600 kPa to 430 kPa is a service braking region, corresponding to 0-100% of service braking level (corresponding relationship is set in advance, and stored in a database, and upon receiving a pressure value sent by the pressure sensor, the instruction conversion unit determines the target braking level corresponding to the pressure value from the database according to the pressure value), and the instruction conversion unit outputs a braking instruction and a braking level electric signal carrying information about the target braking level to the braking control system of the faulty municipal train.

S103: When the rescue locomotive applies emergency braking, when the pressure value of the locomotive train pipe drops to a set value, the pressure switch sends an emergency braking electric signal to the emergency braking solenoid valve and the emergency braking train line; in response to the emergency braking electric signal, the emergency braking solenoid valve vents the locomotive train pipe by means of the pneumatic piston valve; the emergency braking train line sends the emergency braking electric signal to the braking control system; and the braking control system controls the rescued train to apply emergency braking.

Specifically, when the rescue locomotive applies the emergency braking (in an emergency braking condition), taking a train pipe constant pressure of 600 kPa as an example, the pressure of the locomotive train pipe drops to not more than 380 kPa until it reaches 0, in which case, the set value of the pressure switch is exceeded, and the pressure switch sends the emergency braking electric signal to the emergency braking solenoid valve and the emergency braking train line, in response to the emergency braking electric signal, the emergency braking solenoid valve vents the locomotive train pipe by means of the pneumatic piston valve; meanwhile, the emergency braking electric signal is transmitted to the braking control system and the train control system of the municipal train through the couplers and the emergency braking train line, and the rescued train will synchronously apply the emergency braking.

In a feasible implementation solution, with reference to FIG. 2, FIG. 2 shows a flowchart of a rescue locomotive braking method provided by Embodiment 1 of the present invention, where the method further includes steps S201-S203.

S201: upon triggering of unexpected emergency braking on the rescued train, sending, by the train control system, an emergency braking electrical signal to the braking control system and the emergency braking solenoid valve.

S202: in response to the emergency braking electrical signal, controlling, by the braking control system, the rescued train to apply the emergency braking.

S203: in response to the emergency braking electrical signal, controlling, by the emergency braking solenoid valve, the locomotive train pipe to discharge air, so as to enable the rescue locomotive to synchronously apply the emergency braking.

Specifically, during rescue operation, in an event of an unexpected emergency braking application failure on the rescued train, the train control system of the rescued train will send the emergency braking electrical signal to the braking control system of the rescued train, and is connected to the emergency braking solenoid valve on the rescue locomotive through the couplers and the emergency braking train line so as to control the train pipe of the rescue locomotive to discharge air, so that the rescue locomotive synchronously generates emergency braking, thus preventing the locomotive from remaining in a traction state which could lead to a risk of coupler breakage, thereby improving safety of the rescue operation.

In a feasible implementation solution, the rescue locomotive further includes a locomotive relay, a locomotive main reservoir pipe, a main reservoir pipe cutout cock and a train pipe cutout cock, and the rescued train further includes a train main reservoir pipe. The relay is provided between the pressure switch and the emergency braking train line. The emergency braking train line is connected to the emergency braking solenoid valve, the instruction conversion unit, the braking control system, and the train control system, respectively, and the emergency braking train line is configured to transmit the emergency braking electric signal. The rescue locomotive and the rescued train are coupled through the couplers, various electrical train lines in the rescue locomotive and the rescued train are connected through the couplers, and the locomotive main reservoir pipe and the train main reservoir pipe communicate through the couplers.

Specifically, the relay is provided between the pressure switch and the emergency braking train line, and the main reservoir pipe cutout cock and the train pipe cutout cock are in a closed state during non-rescue operation.

In a feasible implementation solution, when the pressure switch sends the emergency braking electric signal to the emergency braking train line, the method further includes:
starting timing by the relay when the pressure switch sends the emergency braking electric signal, and after delaying for a set period (in this period, the train should be ensured to apply the emergency braking at the highest running speed until it comes to a stop), bypassing the emergency braking electric signal sent by the pressure switch, so as to terminate transmission of the emergency braking electric signal, and prevent a non-releasable closed loop formed by continuous air discharge of the pressure switch and the emergency braking solenoid valve, so as to enable the rescue locomotive, after the stop, to supply air to the locomotive train pipe to release.

Specifically, a function of the relay is to bypass the emergency braking electric signal after delaying for the set period, so as to ensure that transmission of the emergency braking signal to the emergency braking train line is terminated after a complete stop of the train, so that the connected emergency braking solenoid valve no longer controls venting of the train pipe.

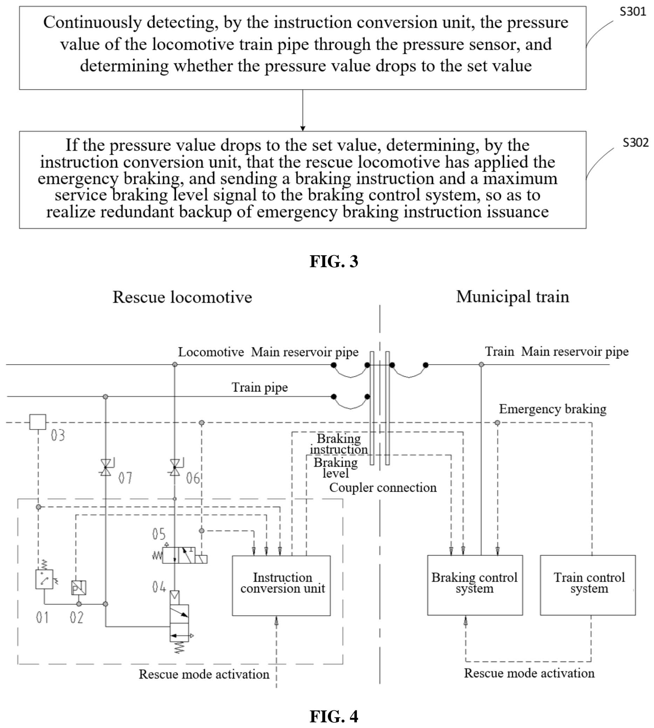

In a feasible implementation solution, with reference to FIG. 3, FIG. 3 shows a flowchart of an emergency braking instruction backup method provided by Embodiment 1 of the present invention, where the method further includes steps S301-S302.

S301: continuously detecting, by the instruction conversion unit, the pressure value of the locomotive train pipe through the pressure sensor, and determining whether the pressure value drops to the set value.

S302: if the pressure value drops to the set value, determining, by the instruction conversion unit, that the rescue locomotive has applied the emergency braking, and sending a braking instruction and a maximum service braking level signal to the braking control system, so as to realize redundant backup of emergency braking instruction issuance.

Specifically, the instruction conversion unit continuously detects the drop in the train pipe pressure via the pressure sensor, and for this purpose, sends the braking instruction and the maximum service braking level signal to the braking control system of the rescued train, as a redundant backup of the emergency braking, so as to ensure safety.

In a feasible implementation solution, the method further includes:
performing, by the instruction conversion unit, failure diagnosis based on the emergency braking electrical signal, the emergency braking electric signal sent by the pressure switch and a detection value of the pressure sensor.

Specifically, the instruction conversion unit detects the emergency braking electrical signal, a pressure switch state signal and a pressure signal of the pressure sensor for the failure diagnosis.

### Embodiment 2

Embodiment 2 of the present invention provides a train rescue system, where the system includes a rescue locomotive and a rescued train. The rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit. The rescued train includes a train rescue mode switch, a train control system and a braking control system.

When the locomotive rescue mode switch is switched on, the locomotive control system is configured to send a locomotive rescue mode activation electric signal to the instruction conversion unit, so as to activate the instruction conversion unit; and when the train rescue mode switch is switched on, the train control system is configured to send a train rescue mode activation electric signal to the braking control system, so as to activate the braking control system to enter a rescued mode.

When the rescue locomotive applies service braking, the pressure sensor is configured to collect a pressure value of the locomotive train pipe and send the pressure value to the instruction conversion unit; the instruction conversion unit is configured to send a braking instruction to the braking control system, and send a braking level electric signal to the braking control system on the basis of a target braking level corresponding to the pressure value; and the braking control system is configured to, in response to the braking instruction and the braking level electric signal, control the rescued train to brake at the target braking level.

When the rescue locomotive applies emergency braking, when the pressure value of the locomotive train pipe drops to a set value, the pressure switch is configured to send an emergency braking electric signal to the emergency braking solenoid valve and the emergency braking train line; the emergency braking solenoid valve is configured to, in response to the emergency braking electric signal, vent the locomotive train pipe by means of the pneumatic piston valve; the emergency braking train line is configured to send the emergency braking electric signal to the braking control system; and the braking control system is configured to control the rescued train to apply emergency braking.

In a feasible implementation solution, the train control system is configured to, upon triggering of unexpected emergency braking on the rescued train, send an emergency braking electrical signal to the braking control system and the emergency braking solenoid valve;
the braking control system is configured to, in response to the emergency braking electrical signal, control the rescued train to apply the emergency braking; and
the emergency braking solenoid valve is configured to, in response to the emergency braking electrical signal, control the locomotive train pipe to discharge air, so as to enable the rescue locomotive to synchronously apply the emergency braking.

In a feasible implementation solution, the rescue locomotive further includes a locomotive relay, a locomotive main reservoir pipe, a main reservoir pipe cutout cock and a train pipe cutout cock, and the rescued train further includes a train main reservoir pipe.

The relay is provided between the pressure switch and the emergency braking train line. The emergency braking train line is connected to the emergency braking solenoid valve, the instruction conversion unit, the braking control system, and the train control system, respectively, and the emergency braking train line is configured to transmit the emergency braking electric signal. The rescue locomotive and the rescued train are coupled through couplers, various electrical train lines in the rescue locomotive and the rescued train are connected through the couplers, and the locomotive main reservoir pipe and the train main reservoir pipe communicate through the couplers.

In a feasible implementation solution, the relay is configured to, when the pressure switch sends the emergency braking electric signal to the emergency braking train line, be closed after delaying for a set period, so as to terminate transmission of the emergency braking electric signal, and prevent a non-releasable closed loop formed by continuous air discharge of the pressure switch and the emergency braking solenoid valve, so as to enable the rescue locomotive, after stop, to supply air to the locomotive train pipe to release.

In a feasible implementation solution, the instruction conversion unit is configured to continuously detect the pressure value of the locomotive train pipe through the pressure sensor, and determine whether the pressure value drops to a set value; and

the instruction conversion unit is configured to, if the pressure value drops to the set value, determine that the rescue locomotive has applied the emergency braking, and send a braking instruction and a maximum service braking level signal to the braking control system, so as to realize redundant backup of emergency braking instruction issuance.

In a feasible implementation solution, the instruction conversion unit is configured to perform failure diagnosis based on the emergency braking electrical signal, the emergency braking electric signal sent by the pressure switch and a detection value of the pressure sensor.

Specifically, referring to FIG. 4, FIG. 4 shows a structural schematic diagram of a specific train rescue system provided by Embodiment 2 of the present invention. Herein, the specific train rescue system includes a rescue locomotive and a municipal train. The rescue locomotive and the municipal train are connected through couplers. The rescue locomotive includes a pressure switch 01, a pressure sensor 02, a relay 03, a pneumatic piston valve 04, an emergency braking solenoid valve 05, a main reservoir pipe cutoff cock 06, a train pipe cutoff cock 07, a locomotive main reservoir pipe, a train pipe and an instruction conversion unit. The municipal train includes a braking control system, a train control system and a train main reservoir pipe. When the rescue locomotive in the train rescue system needs to be used to rescue the municipal train, the instruction conversion unit, the braking control system and the train control system are activated by means of a rescue mode electric signal to enter a rescue state, realizing rescue mode activation. The instruction conversion unit and the pressure switch are configured to send a braking instruction to the braking control system. The braking control system is configured to control the train to apply braking, including emergency braking and service braking with a braking level, based on the received braking electric signal sent by the rescue locomotive.

### Embodiment 3

Embodiment 3 of the present application provides a rescue locomotive. The rescue locomotive includes a pressure switch, a pressure sensor, a pneumatic piston valve, an emergency braking train line, an emergency braking solenoid valve, a locomotive train pipe, a locomotive rescue mode switch, a locomotive control system and an instruction conversion unit.

When the locomotive rescue mode switch is switched on, the locomotive control system is configured to send a locomotive rescue mode activation electric signal to the instruction conversion unit, so as to activate the instruction conversion unit.

When the rescue locomotive applies service braking, the pressure sensor is configured to collect a pressure value of the locomotive train pipe and send the pressure value to the instruction conversion unit.

When the rescue locomotive applies emergency braking, when the pressure value of the locomotive train pipe drops to a set value, the pressure switch is configured to send an emergency braking electric signal to the emergency braking solenoid valve and the emergency braking train line; and the emergency braking solenoid valve is configured to, in response to the emergency braking electric signal, vent the locomotive train pipe by means of the pneumatic piston valve.

The train rescue system provided by the embodiments of the present invention may be a specific hardware on a device, or software, firmware or the like installed on the device. The system provided by the embodiments of the present invention is implemented based on the same principle and creates the same technical effects as the preceding method embodiments, and for parts of the system embodiments that are not mentioned, reference can be made to corresponding contents in the preceding method embodiments for brevity of the description. Those skilled in the art could clearly know that for the convenience and conciseness of the description, reference can be made to corresponding processes in the above method embodiments for specific operation processes of the system and unit described in the preceding, which will not be repeated herein.

It should be understood that in the embodiments provided by the present invention, the system and the method disclosed also may be implemented in other ways. The system embodiments described in the above are merely exemplary, for example, the units are merely divided according to logical functions, but they can be divided in other ways in practical implementation, for another example, multiple units or components can be combined or can be integrated into another system, or some features can be omitted, or not executed. In addition, a mutual coupling, direct coupling or communication connection shown or discussed can be an indirect coupling or communication connection through some communication interfaces, devices or units, and can be in an electrical form, a mechanical form or other forms.

The units described as separate parts may or may not be physically separate, the parts displayed as units may or may not be physical units, i.e., they can be located at one place, or also can be distributed on a plurality of network units. Some or all of the units can be selected as actually needed to achieve the objectives of the solutions in the embodiments.

Besides, various functional units in the embodiments provided by the present invention can be integrated into one processing unit, or various units also can exist in a physically independent way, and two or more than two units also can be integrated into one unit.

The functionality, when implemented as a software functional unit and sold or used as a stand-alone product, can be stored in a computer-readable storage medium. Based on such understanding, the technical solution of the present invention essentially or the part making contribution with respect to the prior art or part of this technical solution can be embodied in a form of software product, and this computer software product is stored in a storage medium, including several instructions used to make one computer device (which can be a personal computer, a sever or a network device etc.) execute all or some of the steps of the methods of various embodiments of the present invention. The aforementioned storage medium includes various media in which program codes can be stored, such as USB flash disk, mobile hard disk, read-only memory (ROM), random access memory (RAM), diskette or compact disk.

It should be noted that similar reference signs and letters represent similar items in the following drawings. Therefore, once a certain item is defined in one drawing, it is not needed to be further defined or explained in subsequent drawings. Besides, the terms "first", "second", "third", etc. are only used to distinguish the description and should not be construed as indicating or implying importance in the relativity.

Finally, it should be indicated that the above embodiments are merely for specific embodiments of the present invention, for illustrating the technical solutions of the present invention, rather than limiting the present invention. The scope of protection of the present invention should not be limited thereto. While the detailed description is made to the present invention with reference to the above-mentioned embodiments, those ordinarily skilled in the art should understand that the technical solutions recited in the above-mentioned embodiments still could be modified or readily changed, or equivalent substitutions could be made to some of the technical features therein; these modifications, changes or substitutions do not make corresponding technical solutions essentially depart from the spirit and scope of the technical solutions of the embodiments of the present invention. They all should be covered within the scope of protection of the present invention. Therefore, the scope of protection of the present invention should be based on the scope of protection of the claims.

## Claims

1. A train rescue method, **characterized by** being applied to a train rescue system, wherein the system comprises a rescue locomotive and a rescued train, the rescue locomotive comprises a pressure switch, a pressure sensor, a pneumatic piston valve, an emergency braking train line, an emergency braking solenoid valve, a locomotive train pipe, a locomotive rescue mode switch, a locomotive control system and an instruction conversion unit, and the rescued train comprises a train rescue mode switch, a train control system and a braking control system, wherein the method comprises that:
when the locomotive rescue mode switch is switched on, the locomotive control system sends a locomotive rescue mode activation electric signal to the instruction conversion unit, so as to activate the instruction conversion unit; and when the train rescue mode switch is switched on, the train control system sends a train rescue mode activation electric signal to the braking control system, so as to activate the braking control system to enter a rescued mode;
when the rescue locomotive applies service braking, the pressure sensor collects a pressure value of the locomotive train pipe and sends the pressure value to the instruction conversion unit; the instruction conversion unit sends a braking instruction to the braking control system, and sends a braking level electric signal to the braking control system based on a target braking level corresponding to the pressure value; and in response to the braking instruction and the braking level electric signal, the braking control system controls the rescued train to brake at the target braking level; and
when the rescue locomotive applies emergency braking, when the pressure value of the locomotive train pipe drops to a set value, the pressure switch sends an emergency braking electric signal to the emergency braking solenoid valve and the emergency braking train line; in response to the emergency braking electric signal, the emergency braking solenoid valve vents the locomotive train pipe by the pneumatic piston valve; the emergency braking train line sends the emergency braking electric signal to the braking control system; and the braking control system controls the rescued train to apply emergency braking.

2. The method according to claim 1, wherein the method further comprises:
upon triggering of unexpected emergency braking on the rescued train, sending, by the train control system, an emergency braking electrical signal to the braking control system and the emergency braking solenoid valve;
in response to the emergency braking electrical signal, controlling, by the braking control system, the rescued train to apply the emergency braking; and
in response to the emergency braking electrical signal, controlling, by the emergency braking solenoid valve, the locomotive train pipe to discharge air, so as to enable the rescue locomotive to synchronously apply the emergency braking.

3. The method according to claim 1, wherein the rescue locomotive further comprises a locomotive relay, a locomotive main reservoir pipe, a main reservoir pipe cutout cock and a train pipe cutout cock, and the rescued train further comprises a train main reservoir pipe, wherein
the relay is provided between the pressure switch and the emergency braking train line; the emergency braking train line is connected to the emergency braking solenoid valve, the instruction conversion unit, the braking control system, and the train control system, respectively, and the emergency braking train line is configured to transmit the emergency braking electric signal; the rescue locomotive and the rescued train are coupled through couplers, various electrical train lines in the rescue locomotive and the rescued train are connected through the couplers, and the locomotive main reservoir pipe and the train main reservoir pipe communicate through the couplers.

4. The method according to claim 3, wherein when the pressure switch sends the emergency braking electric signal to the emergency braking train line, the method further comprises:
starting timing by the relay when the pressure switch sends the emergency braking electric signal, and after delaying for a set period, bypassing the emergency braking electric signal sent by the pressure switch, so as to terminate transmission of the emergency braking electric signal, and prevent a non-releasable closed loop formed by continuous air discharge of the pressure switch and the emergency braking solenoid valve, so as to enable the rescue locomotive, after stop, to supply air to the locomotive train pipe to release.

5. The method according to claim 1, wherein the method comprises:
continuously detecting, by the instruction conversion unit, the pressure value of the locomotive train pipe through the pressure sensor, and determining whether the pressure value drops to the set value; and
when the pressure value drops to the set value, determining, by the instruction conversion unit, that the rescue locomotive has applied the emergency braking, and sending a braking instruction and a maximum service braking level signal to the braking control system, so as to realize redundant backup of emergency braking instruction issuance.

6. The method according to claim 5, wherein the method further comprises:
performing, by the instruction conversion unit, failure diagnosis based on the emergency braking electrical signal, the emergency braking electric signal sent by the pressure switch and a detection value of the pressure sensor.

7. A train rescue system, **characterized by** comprising a rescue locomotive and a rescued train, wherein the rescue locomotive comprises a pressure switch, a pressure sensor, a pneumatic piston valve, an emergency braking train line, an emergency braking solenoid valve, a locomotive train pipe, a locomotive rescue mode switch, a locomotive control system and an instruction conversion unit, and the rescued train comprises a train rescue mode switch, a train control system and a braking control system;
when the locomotive rescue mode switch is switched on, the locomotive control system is configured to send a locomotive rescue mode activation electric signal to the instruction conversion unit, so as to activate the instruction conversion unit; and when the train rescue mode switch is switched on, the train control system is configured to send a train rescue mode activation electric signal to the braking control system, so as to activate the braking control system to enter a rescued mode;
when the rescue locomotive applies service braking, the pressure sensor is configured to collect a pressure value of the locomotive train pipe and send the pressure value to the instruction conversion unit; the instruction conversion unit is configured to send a braking instruction to the braking control system, and send a braking level electric signal to the braking control system based on a target braking level corresponding to the pressure value; and the braking control system is configured to, in response to the braking instruction and the braking level electric signal, control the rescued train to brake at the target braking level; and
when the rescue locomotive applies emergency braking, when the pressure value of the locomotive train pipe drops to a set value, the pressure switch is configured to send an emergency braking electric signal to the emergency braking solenoid valve and the emergency braking train line; the emergency braking solenoid valve is configured to, in response to the emergency braking electric signal, vent the locomotive train pipe by the pneumatic piston valve; the emergency braking train line is configured to send the emergency braking electric signal to the braking control system; and the braking control system is configured to control the rescued train to apply emergency braking

8. The system according to claim 7, wherein the train control system is configured to, upon triggering of unexpected emergency braking on the rescued train, send an emergency braking electrical signal to the braking control system and the emergency braking solenoid valve;
the braking control system is configured to, in response to the emergency braking electrical signal, control the rescued train to apply the emergency braking; and
the emergency braking solenoid valve is configured to, in response to the emergency braking electrical signal, control the locomotive train pipe to discharge air, so as to enable the rescue locomotive to synchronously apply the emergency braking.

9. The system according to claim 7, wherein the rescue locomotive further comprises a locomotive relay, a locomotive main reservoir pipe, a main reservoir pipe cutout cock and a train pipe cutout cock, and the rescued train further comprises a train main reservoir pipe, wherein
the relay is provided between the pressure switch and the emergency braking train line; the emergency braking train line is connected to the emergency braking solenoid valve, the instruction conversion unit, the braking control system, and the train control system, respectively, and the emergency braking train line is configured to transmit the emergency braking electric signal; and the rescue locomotive and the rescued train are coupled through couplers, various electrical train lines in the rescue locomotive and the rescued train are connected through the couplers, and the locomotive main reservoir pipe and the train main reservoir pipe communicate through the couplers.

10. A rescue locomotive, **characterized in that** the rescue locomotive comprises a pressure switch, a pressure sensor, a pneumatic piston valve, an emergency braking train line, an emergency braking solenoid valve, a locomotive train pipe, a locomotive rescue mode switch, a locomotive control system and an instruction conversion unit, wherein
when the locomotive rescue mode switch is switched on, the locomotive control system is configured to send a locomotive rescue mode activation electric signal to the instruction conversion unit, so as to activate the instruction conversion unit;
when the rescue locomotive applies service braking, the pressure sensor is configured to collect a pressure value of the locomotive train pipe and send the pressure value to the instruction conversion unit; and
when the rescue locomotive applies emergency braking, when the pressure value of the locomotive train pipe drops to a set value, the pressure switch is configured to send an emergency braking electric signal to the emergency braking solenoid valve and the emergency braking train line; and the emergency braking solenoid valve is configured to, in response to the emergency braking electric signal, vent the locomotive train pipe by the pneumatic piston valve.
